# EUROPÄISCHE PATENTSCHRIFT

(11) **EP 3 370 535 B1**
(45) Veröffentlichungstag und Bekanntmachung des Hinweises auf die Patenterteilung: **01.01.2020**
(21) Anmeldenummer: 16801145.0
(22) Anmeldetag: 02.11.2016
(51) Int. Cl.: A23C 3/02, A23C 3/05, A23C 9/20, A01J 7/00, A01J 11/00, A23C 3/03, A23C 3/04, A01K 9/00

(54) **VORRICHTUNG UND VERFAHREN ZUM EINFRIEREN UND AUFTAUEN VON MILCH**
DEVICE AND METHOD FOR FREEZING AND UNFREEZING MILK
DISPOSITIF ET PROCÉDÉ POUR CONGELER ET DÉCONGELER DU LAIT

(30) Priorität: 02.11.2015 DE 102015118731
(43) Veröffentlichungstag der Anmeldung: 12.09.2018
(73) Patentinhaber: Förster, Martin, 78234 Engen (DE)
(72) Erfinder: Förster, Martin, 78234 Engen (DE)
(74) Vertreter: Patentanwälte und Rechtsanwalt Weiß, Arat & Partner mbB
(86) Internationale Anmeldenummer: PCT/EP2016/076446
(87) Internationale Veröffentlichungsnummer: WO 2017/076915

(56) Entgegenhaltungen:
- EP-A2- 1 897 438
- DE-A1-102006 054 215
- US-A- 2 995 418
- US-B1- 6 276 264

## Beschreibung

Die vorliegende Erfindung betrifft eine Vorrichtung und ein Verfahren zum Einfrieren von Milch, insbesondere von Biestmilch, in einem Behälter mit einem Temperierelement.

### Stand der Technik

Insbesondere bei dem Tränken von Kälbern wird häufig Milch verwendet, die vorab zur Lagerung pasteurisiert, gekühlt und sogar gefroren wird. Die vorliegende Erfindung bezieht sich vor allem, jedoch nicht ausschliesslich, auf Biestmilch. Biestmilch ist eine von der Mutterkuh stammende Erstmilch, die besonders reich an Vitaminen, Mineralien, besonderen Eiweissen, Abwehrstoffen usw. und zur Stärkung des Immunsystems eines Jungtiers verfüttert werden kann. Sie enthält aber auch Keime, die schädlich sind.

Zur Abtötung der Keime sind beispielsweise Pasteurisierungseinrichtungen bekannt, wie sie in der WO 2004/089069 A1 oder in der EP 1 897 438 A2 beschrieben sind. Damit die pasteurisierte Milch nicht wieder verstärkt mit Keimen versetzt wird, muss sie in entsprechenden Vorratsbehältern auf eine keimwachstumshemmende Temperatur abgekühlt werden. Dies hat allerdings den weiteren Nachteil, dass, wenn ein Tier mit Futteranspruch mit der pasteurisierten, aber gekühlten Milch gefüttert werden soll, diese wieder auf eine entsprechende Tränketemperatur aufgewärmt werden muss.

Bisher gibt es eine Vorrichtung, bei der insbesondere die Biestmilch direkt nach dem Melken über einen Trichter in eine vier Liter grosse Plastiktüte mit Kunststoffkorb abgefüllt wird. Diese wird dann verschlossen, beschriftet und in einem, für die Vorrichtung angepassten, Gefrierschrank eingefroren.

Das Auftauen der Biestmilch erfolgt über ein Wasserbad, in das der Korb mit der darin befindlichen Plastiktüte eingelegt wird. Durch ständige Bewegung des Korbes in dem warmen Wasser wird die Biestmilch innerhalb von 15 min aufgetaut.

Die Problematik bei dieser Erfindung liegt darin, dass die Milch nach dem Melken in einen Trichter gefüllt wird und somit der Luft und diversen Keimen ausgesetzt ist. Keime, die es eigentlich gilt abzutöten. Gefährliche Bakterien können dann in die Milch gelangen. Diese sind so resistent, dass sie sogar einer Erhitzung der Milch auf 60° standhalten.

Weiterhin kann mit dieser Erfindung auch pasteurisiert werden. Hierfür wird der Korb mit der darin befindlichen Plastiktüte bei 60° in dem Wasserbad eine Stunde lang erwärmt und danach eingefroren.

Eine weitere Erfindung, beschrieben in der DE10 2010 060 715 A1 oder auch WO2012/069158, sieht vor, dass die Biestmilch nach dem Melken direkt in einen Behälter abgefüllt und dann eingefroren wird. Um die Milch für das Kalb zu erwärmen, schlägt die DE 10 2006 054 215 A1 vor, dass das flüssige Nahrungsmittel im Behälter direkt mit einem temperierten, gasförmigen Medium beaufschlagt wird. Dabei wird mittels einer Dampflanze Dampf in den Behälter geblasen. Hierbei wird die Milch gleich in mehreren Bereichen aufgetaut bzw. erwärmt.

Ein weiterer Nachteil der Erfindungen ist, dass nach dem Auftauen die Biestmilch erst noch in eine Nuckelflasche gefüllt werden muss. Hier können weitere Keime die Milch verunreinigen.

### Aufgabe

Die Aufgabe der nachfolgenden Erfindung ist, allgemein eine Behandlung und insbesondere eine Erwärmung und/oder Pasteurisierung oder auch Kühlung des flüssigen Nahrungsmittels, insbesondere der Milch, wesentlich schneller zu ermöglichen, wobei auch eine Reinigung des Behälters zudem erleichtert werden soll. Insbesondere soll Biestmilch gegebenenfalls im Zusammenhang mit einer Melkanlage bis hin zum Verzehr durch das Kalb so behandelt werden, dass so wenig wie möglich Keime hineingelangen und die Milch dennoch alle Nährstoffe aufweist, die das Kalb braucht. Die gesamte Vorrichtung soll schnell wirksam sein und kostengünstig.

### Lösung der Aufgabe

Zur Lösung dieser Aufgabe führt zum einen, dass das Temperierelement in der gefrorenen Milch verbleibt.

Gemäß der Erfindung offenbart Anspruch 1 eine Vorrichtung zum Enfrieren von Milch. Gemäß der Erfindung offenbart Anspruch 15 ein Verfahren zum Einfrieren und Auftauen von Milch.

Unter Temperierelement soll im Rahmen der vorliegende Erfindung jedes Bauelement verstanden werden, welches dazu geeignet ist, die Milch so weit herab zu kühlen, dass sie im gefrorenen Zustand gelagert werden kann. Andererseits soll das Temperierelement, da es in der Milch verbleibt, auch wieder zum Aufwärmen der Milch geeignet sein. Hierzu eignet sich jeder Wärmetauscher, der ein Erreichen von tiefen aber auch von höheren Temperaturen ermöglicht. Denkbar und von der vorliegenden Erfindung umfasst sein soll auch die Möglichkeit, in dem Temperierelement zwei getrennte Elemente vorzusehen, eines zum Abkühlen und eines zum Aufwärmen der Milch. Bei dem Teil des Temperierelements, welches das Aufwärmen übernimmt, kann es sich auch um eine Art Tauchsieder handeln, der elektrisch betrieben wird. Auch eine Dampflanze, wie in der WO 2012/069158 beschrieben, kann Anwendung finden.

Bevorzugt weist das Temperierelement oder der Teil des Temperierelements zum Abkühlen der Milch einen Hohlraum auf. Dieser Hohlraum befindet sich in einer geeigneten Einrichtung, welche diesen Hohlraum ausbildet. Hier sind viele Möglichkeiten denkbar und sollen von der Erfindung umfasst sein. Bevorzugt wird eine tauchsiederartige Einrichtung. Dieser Hohlraum ist dann spiralförmig ausgebildet. Die Spirale kann den Behälter ganz ausfüllen oder nur mittig angeordnet sein. Es ist auch möglich, mehrere kleinere Spiralen in dem Behälter zu platzieren. In beiden Varianten ist eine gute Wärme- oder Kälteverteilung möglich.

Die Einrichtung, welche den Hohlraum ausbildet, kann genauso gut auch stabförmig ausgebildet sein. Ein oder mehrere hohle Stäbe können sich in dem Behälter befinden und ein Temperiermedium aufnehmen.

Egal ob nun spiral- oder stabförmig, der Hohlraum besitzt eine Einfüllöffnung worüber er mit einem Temperiermedium, bevorzugt Wasser, befüllt werden kann. Die Einfüllöffnung befindet sich bevorzugt ausserhalb des Behälters, vorzugsweise an die Oberfläche des Behälters angrenzend. Dies hat den Vorteil, dass der Behälter nicht geöffnet werden muss, um die Einrichtung zum Temperieren einzuführen. Dies führt wiederum dazu, dass weniger Keime durch die beim Öffnen des Behälters einströmende Luft in die Milch geraten können.

Damit das Temperiermedium aus dem Hohlraum entfernt werden kann, ist am Ende des Hohlraums ein Auslass angebracht. Auch dieser befindet sich ausserhalb des Behälters, im bevorzugten Ausführungsbeispiel ebenfalls über dem Behälter. Dies hat den Vorteil, dass das Temperiermedium auch während des Erwärmvorgangs abgelassen werden kann, um neues über die Einfüllöffnung nachzufüllen. Denn das Temperiermedium verliert selbst an Wärme bzw. Kälte, da es diese an ihre Umgebung, in dem Fall die Milch, abgibt. Die ganze Einrichtung mit Hohlraum, Einfüllöffnung und Auslass ist bevorzugt einstückig ausgestaltet und kann in den Behälter eingesetzt bzw. aus dem Behälter genommen werden.

In jedem Fall verbleibt die Einrichtung in dem Behälter und dient später auch zum Auftauen der Milch. Der grosse Vorteil besteht darin, dass auch hier weniger Keime in die Milch gelangen können. Denn nachdem die Milch beispielsweise zum Pasteurisieren erhitzt wurde, muss sie nicht in einen weiteren, für das Einfrieren bestimmten Behälter umgefüllt werden. Weniger Umfüllen bedeutet weniger Verunreinigung.

Gerade bei der Biestmilch ist eine schonende Erhitzung sehr wichtig. Im Gegensatz zur normalen Milch bilden sich bei der Biestmilch beim Auftauen bzw. Erwärmen Hitzenester, die zu einer Schädigung der Biestmilch in diesem Bereich führen. Zum Beispiel wurde bei der Behandlung der Biestmilch in einer Mikrowelle festgestellt, dass es durch die Überhitzung zur Zerstörung der wichtigen Gamma-Globuline kommt. Diese Überhitzung bzw. die Ausbildung von Hitzenester wird durch die vorliegende Erfindung wesentlich minimiert.

Ein weiterer ganz grosser Vorteil der vorliegenden Erfindung ist, dass die Vorrichtung direkt an eine Melkanlage angeschlossen werden kann. Somit geschieht das Ganze in einem komplett geschlossenen Kreislauf, der eine hohe Qualität der Milch zur Folge hat. Insbesondere wird das Keimwachstum reduziert bzw. ganz gestoppt.

Die Lösung für die weiter oben genannte Problematik zeigt die Erfindung auf, dass der Behälter einen Deckel mit einem Nuckel aufweist. Somit kann die Biestmilch oder auch andere Milch direkt einem Kalb verabreicht werden.

Der Deckel kann auf beliebige Art und Weise auf den Behälter aufgesetzt werden, insbesondere ist daran gedacht, an dem Behälterrand ein Innen- oder Aussengewinde vorzusehen und den Deckel mit einem entsprechenden Gegengewinde zu versehen.

Der Nuckel ist vorzugsweise exzentrisch auf dem Deckel angeordnet, um dem Kalb das Trinken und die Handhabung des Behälters zu erleichtern. Ebenfalls kann er sowohl fest, als auch lösbar mit dem Deckel verbunden werden. Somit ist jede Möglichkeit gegeben, ihn zu reinigen.

Am Deckel ist ausserdem ein Henkel zugeordnet, der das Halten der Flasche enorm erleichtert. Jedoch kann der Henkel auch abgenommen werden, um ihn beispielsweise zu reinigen. Ein grosser Vorteil am aussenliegenden Henkel ist, dass er keine Keime ins Innere des Behälters bringen kann. Gern sammeln sich Keime am Übergang von Behälter zu Henkel, aber dem wurde hier entgegengewirkt. Dies gilt insbesondere für den Fall, wenn der Henkel ein integrierter Bestandteil des Behälters ist. In der Regel ist dann der Henkel hohl, sodass er beim Füllen des Behälters auch mit Milch befüllt wird. Die Reinigung eines derartigen hohlen Henkel ist schwierig. Beispielsweise kann der Henkel natürlich auch stumpf an die Behälterwand angesetzt werden. Auch bei diesem Ausführungsbeispiel ist es nicht möglich, dass Milch in den hohlen Henkel eindringt.

Der Behälter selbst weist eine sehr große Öffnung auf, die ein Reinigen des Inneren erheblich erleichtert. Außerdem ist vorgesehen, dass der Behälter in seinem Querschnitt mehreckig ausgebildet ist, so das eine möglicherweise entstehende Wirbelströmung der Milch, beispielsweise beim Auftauen, gebrochen wird.

Dieser erfindungsgemäss sehr einfache Behälter kann natürlich besonders bevorzugt auch für die Behandlung von Biestmilch verwendet werden. Erfindungsgemäß wird in ihn die oben beschriebene Einrichtung zum Temperieren der Milch eingesetzt. Erfindungsgemäß verbleibt diese Einrichtung in dem Behälter, auch wenn die Biestmilch eingefroren wird. Zum Auftauen wird dann ein entsprechendes Temperier-Medium in die Einrichtung eingefüllt, die Milch aufgetaut und direkt an das Kalb verfüttert werden. Die ganze Erfindung führt dann zu einem geschlossenen Kreislauf, in dem so wenig wie nur irgend möglich Keime die Biestmilch verunreinigen können.

In einem weiteren Ausführungsbeispiel der Erfindung ist um den Behälter ein weiterer Behälter vorgesehen, wobei dazwischen eine Kammer ausgebildet wird. Hier kann zum Beispiel ein Temperiermedium zugeführt werden, so dass ein Auftauen von aussen unterstützt wird. Danach ist es denkbar, beispielsweise über eine Umwälzpumpe, das Temperiermedium wieder dem Kreislauf zuzuführen. Somit ist ein geschlossener Kreislauf vorgesehen.

Denkbar ist auch, dass der innere Behälter, in dem sich beispielsweise die Milch befindet, einen Auslass in den äußeren Behälter aufweist, so das bereits aufgetaute Milch in den äußeren Behälter strömen kann. Hier ist vorgesehen, dass diese bereits aufgetaute Milch wieder zurück in den inneren Behälter gebracht wird, sei es durch eine Pumpe oder einen Überlauf, so dass sie das Auftauen der Milch in dem inneren Behälter unterstützen kann.

Des weiteren kann vorgesehen werden, dass in dem Behälter ein Kissen vorgesehen wird, dessen Volumen pulsierend veränderbar ist. Vor allem ist die Anordnung dieses Kissens nahe des Bodens des Behälters vorgesehen, so dass die bereits aufgetaute Milch in eine pulsierende Bewegung von unten nach oben versetzt wird, was ebenfalls zu einer Beschleunigung des Auftauens führt. Das Kissen könnte zum Beispiel ein elastischer Beutel sein, der mit einer Pumpe verbunden ist, die Luft in den Beutel eindrückt bzw. wieder aus dem Beutel entnimmt. Hier sind viele Möglichkeiten denkbar und sollen von der Erfindung umfasst sein.

Ein weiteres Ausführungsbeispiel aber nicht gemäß der Erfindung, wobei es natürlich besonders gut zusammen mit dem oben beschriebenen Temperierelement zur Anwendung kommen kann, betrifft ein Verfahren zum Behandeln und insbesondere zum Temperieren, Erwärmen und/oder Kühlen von flüssigem Nahrungsmittel für Tiere, insbesondere Milch für Jungtiere, zum Verfüttern und/oder Pasteurisieren dieses flüssigen Nahrungsmittels, beispielsweise Milch, welches in einen Behälter eingegeben und mit Dampf behandelt wird, wobei der Dampf dem flüssigen Nahrungsmittel pulsierenden zugeführt wird.

Das Pulsieren des Dampfes hat zur Folge, dass in dem Nahrungsmittel keine gleichmäßige Bewegung zugelassen wird, wenn es behandelt wird. Das Pulsieren erzeugt eine Unruhe, sodass die Durchmischung mit Dampf wesentlich verbessert wird. Hierdurch erfolgt zum Beispiel eine schnellere Pasteurisierung. Im Falle des Wiedererwärmens des Nahrungsmittels werden zum Beispiel Vereisungsbrücken, die sich beim Wiedererwärmen bilden, wesentlich schneller zerstört. Auch hierdurch erfolgen ein schnelleres und ein gleichmäßigeres Wiedererwärmen.

Nochmals verbessert wird die Zugabe des Dampfes durch die Zuführung eines weiteren Gases, insbesondere von Luft. Die Turbulenz in dem Nahrungsmittel wird erhöht. Der Dampf wird besser an die Nahrungsmittelbestandteile herangeführt.

Als Beispiele für Vorrichtungen zum pulsierenden Einbringen von Dampf soll auf die DE 10 2006 054215 A1 und die DE 10 2010 060715 A1 verwiesen werden. Werden diese Vorrichtungen beispielsweise bei einem inneren Behälter benutzt, der in einen äußeren Behälter eingesetzt ist, so können sie sowohl im inneren Behälter als auch im Zwischenraum zwischen innerem Behälter und äußerem Behälter Anwendung finden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine Seitenansicht der Vorrichtung zum Behandeln von Milch;
**Figur 2** ein Blockschaltbild der Funktionsweise der Vorrichtung gemäss Figur 1;
**Figur 3** eine Seitenansicht eines Ausführungsbeispiels der erfindungsgemässen Vorrichtung;
**Figur 4** eine perspektivische Ansicht eines Deckels der erfindungsgemässen Vorrichtung gemäss Figur 3
**Figur 5** eine Seitenansicht eines weiteren Ausführungsbeispiels der Vorrichtung.

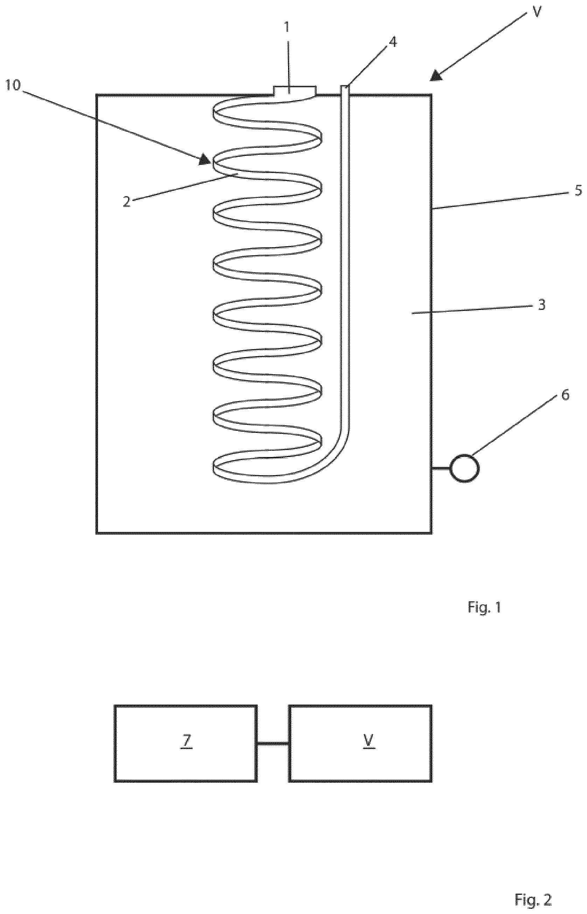

Gemäss Fig. 1 umfasst die Vorrichtung V einen Behälter 5 mit einem oder mehreren darin angeordneten Einrichtungen 10 zum Temperieren eines Inhalts des Behälters 5 mit einem oder mehreren Hohlräumen 2. Der Hohlraum 2 kann in verschiedenen Grössen und Formen ausgebildet sein. Dieser Hohlraum 2 ist im bevorzugten Ausführungsbeispiel spiralförmig ausgebildet und hat eine Einfüllöffnung 1 und einen Auslass 4.

Ebenfalls ist dem Behälter ein Temperatursensor 6 zugeordnet. Über den Temperatursensor 6 wird die Temperatur im Inneren des Behälters 5 gemessen.

Gemäss dem Ausführungsbeispiel nach Figur 1 sollen Einfüllöffnung 1 und Auslass 4 auf der gleichen Seite des Behälters 5 angeordnet sein. Auf diese Weise kann die Einrichtung 10 leicht in den Behälter 5 eingesetzt und aus dem Behälter 5 entnommen werden. Denkbar ist aber auch eine andere Ausgestaltung der Einrichtung 10, bei der sich Einfüllöffnung 1 und Auslass 4 an anderer Stelle des Behälters befinden.

Der Hohlraum 2 dient der Aufnahme eines Temperiermediums. Als Temperiermedium kann jedes Medium infrage kommen, welches zum Temperaturaustausch geeignet ist. Der Einfachheit halber wird natürlich Wasser bevorzugt.

Die Funktionsweise der vorliegenden Erfindung ist Folgende:
In einem bevorzugten Ausführungsbeispiel dient dieser Behälter 5 zum Behandeln von Kolostrum bzw. Biestmilch. Beispielsweise soll diese Biestmilch pasteurisiert, d.h. über 60° erhitzt werden. Hierzu wird die Biestmilch in den Behälter 5 eingegeben und die Einrichtung 10 in den Behälter 5 eingesetzt. Jetzt wird ein entsprechendes Temperiermedium in den Hohlraum 2 eingegeben und die Biestmilch pasteurisiert.

Danach kann sie durch ein kühleres Temperiermedium auf eine Temperatur gebracht werden, sodass sie direkt zum Trinken zur Verfügung steht. Über den Temperatursensor 6 wird kontrolliert, wann die Biestmilch 3 ihre gewünschte Temperatur erreicht hat. Wenn dies soweit ist, kann die Einrichtung 10 aus dem Behälter 5 entnommen und/oder das Temperiermedium aus dem Auslass 5 abgelassen werden. Die Biestmilch 3 kann nun an das Kalb verfüttert werden.

Soll die Biestmilch aber nicht sofort zum Trinken zur Verfügung stehen, kann sie eingefroren werden. Dies geschieht zusammen mit der Einrichtung 10. Soll die Milch dann zum Trinken vorbereitet werden, wird ein entsprechendes warmes Temperiermedium in den Hohlraum 2 eingefüllt. In der Praxis hat sich herausgestellt, dass durch die erfindungsgemässe Einrichtung 10 ein sehr schnelles und gleichmässiges Auftauen der Biestmilch stattfindet. Beispielsweise warmes Wasser in dem Hohlraum 2 gibt seine Wärme an die Biestmilch 3 ab und erwärmt sie schonend. Um ein schnelles Auftauen der Biestmilch 3 zu erreichen, kann über den Auslass 4 das, bereits etwas abgekühlte warme, Wasser abgelassen und über die Einfüllöffnung 1 wieder neues und wärmeres hinzugefügt werden. Dieser Vorgang kann solange wiederholt werden, bis die Biestmilch 3 die angestrebte Trinktemperatur erreicht hat. Danach kann sie dem Tier verabreicht werden.

Die Vorrichtung V ist auch direkt im Zusammenhang mit der Tätigkeit einer Melkanlage 7 anwendbar. Hierzu kann gemäss Fig. 2 die Biestmilch direkt von der Melkanlage 7 in den Behälter 5 geleitet werden. Danach wird über die Einfüllöffnung 1 ein Kühlmedium eingefüllt, welches seine Kälte an die Biestmilch 3 abgibt und so diese schonend einfriert, oder Kälte wird von aussen zugeführt, wobei die Einrichtung 10 zusammen mit der Milch eingefroren wird.

Über den Temperatursensor 6 wird kontrolliert, inwieweit die Biestmilch 3 eingefroren ist. Je nach dem kann auch hier über den Auslass 4 das bereits erwärmte Kühlmedium abgelassen und neues über die Einfüllöffnung 1 hinzugefügt werden.

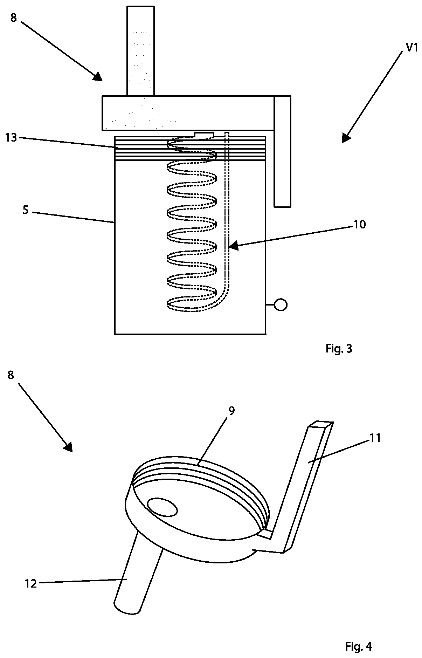

In Figur 3 wird ein Ausführungsbeispiel der vorliegenden Vorrichtung V1 gezeigt. Hier weist der Behälter 5 ein aussenliegendes Gewinde 13 auf, welches weiterhin als Aussengewinde bezeichnet wird. Auf dieses Aussengewinde 13 wird ein Deckel 8 geschraubt.

Figur 4 zeigt eine perspektivische Ansicht des Deckels 8. Dieser Deckel 8 weist ein Gewinde 9 auf, welches im vorliegenden Ausführungsbeispiel innenliegend ist und somit als Innengewinde 9 bezeichnet wird.

Desweiteren weist der Deckel 8 einen Henkel 11 und einen Nuckel 12 auf, die beide aussen an dem Deckel fest und/oder lösbar angebracht sein können. Bevorzugt wird vor allem, dass der Henkel 11 am Deckel 8 und aussenliegend gegenüber dem Behälter 5 angeordnet ist.

Der Nuckel 12 ist im bevorzugten Ausführungsbeispiel exzentrisch angeordnet, um den Saugvorgang für das Kalb zu vereinfachen. Er kann jedoch auch mittig angeordnet sein. Somit kann das Kalb direkt nach dem Auftauen der Biestmilch gefüttert werden ohne erst alles in eine Nuckelflasche umfüllen zu müssen.

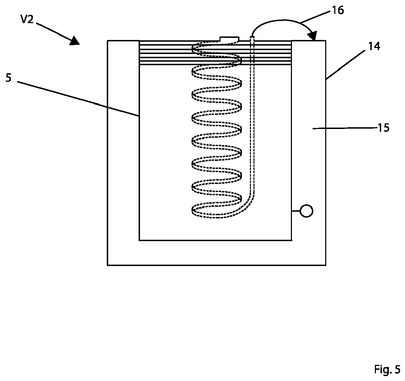

Eine Vorrichtung V2 weist gemäss Figur 5 weiterhin noch einen Aussenbehälter 14 auf, wobei zwischen Behälter 5 und Aussenbehälter 14 eine Kammer 15 ausgebildet ist, in die, wie durch den Pfeil 16 angedeutet, das Temperier-Medium übergeführt werden kann. Danach ist es denkbar, beispielsweise über eine Umwälzpumpe, das Temperiermedium wieder dem Kreislauf zuzuführen.

**Bezugszeichenliste**

| | | | | | |
|---|---|---|---|---|---|
| 1 | Einfüllöffnung | 34 | | 67 | |
| 2 | Hohlraum | 35 | | 68 | |
| 3 | Biestmilch | 36 | | 69 | |
| 4 | Auslass | 37 | | 70 | |
| 5 | Behälter | 38 | | 71 | |
| 6 | Temperatursensor | 39 | | 72 | |
| 7 | Melkanlage | 40 | | 73 | |
| 8 | Deckel | 41 | | 74 | |
| 9 | Innengewinde | 42 | | 75 | |
| 10 | Einrichtung | 43 | | 76 | |
| 11 | Henkel | 44 | | 77 | |
| 12 | Nuckel | 45 | | 78 | |
| 13 | Aussengewinde | 46 | | 79 | |
| 14 | Aussenbehälter | 47 | | | |
| 15 | Kammer | 48 | | V | Vorrichtung |
| 16 | Pfeil | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung (V1) zum Einfrieren von Milch, insbesondere von Biestmilch (3), umfassend einen Behälter (5) mit einem darin angeordneten Temperierelement (10), wobei der Behälter einen Deckel (8) mit einem Nuckel (12) zur direkten Verabreichung der Milch an Jungtiere, insbesondere an Kälber aufweist, wobei das Temperierelement (10) zum Einfrieren und Auftauen der Milch verwendbar ist und nach dem Einfrieren in der gefrorenen Milch verbleiben kann.

2. Vorrichtung nach Anspruch 1, **dadurch gekennzeichnet, dass** zum Behandeln zumindest ein in dem Behälter (5) befindlicher und darin verbleibender Hohlraum (2) mit dem Behandlungsmedium befüllbar ist.

3. Vorrichtung nach Anspruch 2, **dadurch gekennzeichnet, dass** der Hohlraum (2) spiralförmig ausgebildet ist.

4. Vorrichtung nach Anspruch 2 oder 3, **dadurch gekennzeichnet, dass** der Hohlraum (2) eine Einfüllöffnung (1) und einen Auslass (4) aufweist.

5. Vorrichtung nach Anspruch 4, **dadurch gekennzeichnet, dass** sich die Einfüllöffnung (1) und der Auslass (4) ausserhalb des Behälters (5) befinden.

6. Vorrichtung nach Anspruch 5, **dadurch gekennzeichnet, dass** der Auslass (4) und die Einfüllöffnung (1) auf der gleichen Seite des Behälters (5) angeordnet sind.

7. Vorrichtung nach wenigstens einem der vorhergehenden Ansprüche, **dadurch gekennzeichnet, dass** sich der Hohlraum (2) in einer tauchsiederähnlichen Einrichtung (10) befindet, die in den Behälter (5) entfernbar eingesetzt ist.

8. Vorrichtung nach einem der Ansprüche 1 bis 7, **dadurch gekennzeichnet, dass** diese direkt an die Melkanlage angekoppelt werden kann.

9. Vorrichtung nach einem der Ansprüche 1 bis 8, **dadurch gekennzeichnet, dass** der Behälter (5) an seinem oberen Rand ein aussen- und/oder innenliegendes Gewinde (13) aufweist und dass der Deckel (8) ein innen und/oder aussenliegendes Gewinde (9) als Gegengewinde aufweist.

10. Vorrichtung nach zumindest einem der Ansprüche 1 bis 9 **dadurch gekennzeichnet, dass** dem Deckel (8) ein Henkel (11) zugeordnet ist.

11. Vorrichtung nach zumindest einem der Ansprüche 1 bis 10, **dadurch gekennzeichnet, dass** der Henkel (11) fest und/oder lösbar mit dem Deckel (8) verbunden ist.

12. Vorrichtung nach zumindest einem der Ansprüche 1 bis 11, **dadurch gekennzeichnet, dass** um den Behälter (5) ein weiterer Aussenbehälter (14) angeordnet ist und mit diesem zusammen eine Kammer (15) ausbildet.

13. Vorrichtung nach einem der Ansprüche 1 bis 12, **dadurch gekennzeichnet, dass** ein Temperiermedium in die Kammer (15) überführbar ist.

14. Vorrichtung nach wenigstens einem der vorhergehenden Ansprüche, **dadurch gekennzeichnet, dass** in dem Behälter (5) zumindest ein Element/Kissen eingesetzt ist, dessen Volumen pulsierende veränderbar ist.

15. Verfahren zum Einfrieren und Auftauen von Milch, insbesondere von Biestmilch (3), in einem Behälter (5), wobei die Milch mit Hilfe eines Temperierelement (10) eingefroren und aufgetaut wird, wobei das Temperierelement nach dem Einfrieren in der gefrorenen Milch verbleibt.

## Claims

1. Device (V1) for freezing milk, in particular colostrum (3), comprising a container (5) with a temperature control element (10) arranged therein, the container having a lid (8) with a teat (12) for direct administration of the milk to young animals, in particular to calves, the temperature control element (10) being usable for freezing and thawing the milk and being able to remain in the frozen milk after freezing.

2. Device according to claim 1, **characterized in that** at least one cavity (2) located in the container (5) and remaining therein can be filled with the treatment medium for the purpose of treatment.

3. Device according to claim 2, **characterized in that** the cavity (2) is spirally formed.

4. Device according to Claim 2 or 3, **characterized in that** the cavity (2) has a filling opening (1) and an outlet (4).

5. Device according to claim 4, **characterized in that** the filling opening (1) and the outlet (4) are located outside the container (5).

6. Device according to claim 5, **characterized in that** the outlet (4) and the filling opening (1) are arranged on the same side of the container (5).

7. Device according to at least one of the preceding claims, **characterized in that** the cavity (2) is located in an immersion boiler-like device (10) which is removably inserted into the container (5).

8. Device according to one of claims 1 to 7, **characterized in that** it can be coupled directly to the milking installation.

9. Device according to one of claims 1 to 8, **characterized in that** the container (5) has at its upper edge an external and/or internal thread (13) and that the lid (8) has an internal and/or external thread (9) as counter thread.

10. Device according to at least one of claims 1 to 9, **characterized in that** a handle (11) is associated with the cover (8).

11. Device according to at least one of claims 1 to 10, **characterized in that** the handle (11) is fixedly and/or detachably connected to the cover (8).

12. Device according to at least one of claims 1 to 11, **characterized in that** a further outer container (14) is arranged around the container (5) and forms a chamber (15) together therewith.

13. Device according to one of claims 1 to 12, **characterized in that** a tempering medium can be transferred into the chamber (15).

14. Device according to at least one of the preceding claims, **characterized in that** at least one element/cushion is inserted in the container (5), the volume of which is variable in a pulsating manner.

15. Method for freezing and defrosting milk, in particular colostrum (3), in a container (5), the milk being frozen and defrosted with the aid of a temperature control element (10), the temperature control element remaining in the frozen milk after freezing.

## Revendications

1. Dispositif (V1) pour congeler du lait, en particulier du colostrum (3), comprenant un récipient (5) avec un élément de thermorégulation (10) y disposé,
dans lequel le récipient présente un couvercle (8) avec une tétine (12) destinée à l'administration directe du lait à de jeunes animaux, en particulier à des veaux,
dans lequel l'élément de thermorégulation (10) peut être utilisé pour congeler et décongeler le lait et peut, après la congélation, rester dans le lait congelé.

2. Dispositif selon la revendication 1, **caractérisé par le fait que**, pour le traitement, au moins un espace vide (2) se trouvant dans le récipient (5) et y restant peut être rempli avec le milieu de traitement.

3. Dispositif selon la revendication 2, **caractérisé par le fait que** l'espace vide (2) est réalisé en spirale.

4. Dispositif selon la revendication 2 ou 3, **caractérisé par le fait que** l'espace vide (2) présente une ouverture de remplissage (1) et une sortie (4).

5. Dispositif selon la revendication 4, **caractérisé par le fait que** l'ouverture de remplissage (1) et la sortie (4) se trouvent à l'extérieur du récipient (5).

6. Dispositif selon la revendication 5, **caractérisé par le fait que** la sortie (4) et l'ouverture de remplissage (1) sont disposées du même côté du récipient (5).

7. Dispositif selon au moins l'une des revendications précédentes, **caractérisé par le fait que** l'espace vide (2) se trouve dans un dispositif semblable à un thermoplongeur (10) qui est placé de manière amovible dans le récipient (5).

8. Dispositif selon l'une des revendications 1 à 7, **caractérisé par le fait qu'**il peut être couplé directement à l'installation de traite.

9. Dispositif selon l'une des revendications 1 à 8, **caractérisé par le fait que** le récipient (5) présente, sur son bord supérieur, un filetage extérieur et/ou intérieur (13) et que le couvercle (8) présente un filetage intérieur et/ou extérieur (9) comme filetage antagoniste.

10. Dispositif selon au moins l'une des revendications 1 à 9, **caractérisé par le fait qu'**au couvercle (8) est associée une poignée (11).

11. Dispositif selon au moins l'une des revendications 1 à 10, **caractérisé par le fait que** la poignée (11) est connectée de manière fixe et/ou amovible au couvercle (8).

12. Dispositif selon au moins l'une des revendications 1 à 11, **caractérisé par le fait qu'**un autre récipient extérieur (14) est disposé autour du récipient (5) et forme, ensemble avec ce dernier, une chambre (15).

13. Dispositif selon l'une des revendications 1 à 12, **caractérisé par le fait qu'**un fluide de thermorégulation peut être transféré dans la chambre (15).

14. Dispositif selon au moins l'une des revendications précédentes, **caractérisé par le fait que** dans le récipient (5) est placé au moins un élément/coussin dont le volume est variable par pulsations.

15. Procédé pour congeler et décongeler du lait, en particulier du colostrum (3), dans un récipient (5),
dans lequel le lait est congelé et décongelé au moyen d'un élément de thermorégulation (10), l'élément de thermorégulation restant, après la congélation, dans le lait congelé.
